(19)    **Europäisches Patentamt**

**European Patent Office**    (11) Veröffentlichungsnummer: **0 230 238**

**Office européen des brevets**                                          **B1**

(12)                  **EUROPÄISCHE PATENTSCHRIFT**

(45) Veröffentlichungstag der Patentschrift: **24.10.90**     (51) Int. Cl.⁵: **H 02 M 7/48**

(21) Anmeldenummer: **87100228.3**

(22) Anmeldetag: **09.01.87**

(54) **Phasenregeleinrichtung für Parallelschwingkreisumrichter.**

(30) Priorität: **17.01.86 DE 3601191**            (73) Patentinhaber: **AEG - Elotherm GmbH**
                                                  **Hammesberger Strasse 31**
                                                  **D-5630 Remscheid-Hasten (DE)**

(43) Veröffentlichungstag der Anmeldung:
    **29.07.87 Patentblatt 87/31**                     (72) Erfinder: **Busch, Bernd**
                                                  **Burger Strasse 284**
                                                  **D-5630 Remscheid (DE)**

(45) Bekanntmachung des Hinweises auf die
    Patenterteilung:
    **24.10.90 Patentblatt 90/43**                     (74) Vertreter: **Patentanwaltsbüro Cohausz & Florack**
                                                  **Schumannstrasse 97**
                                                  **D-4000 Düsseldorf 1 (DE)**

(84) Benannte Vertragsstaaten:
    **AT BE CH DE FR GB IT LI SE**

(56) Entgegenhaltungen:
    **EP-A-0 109 522**
    **GB-A-2 113 487**

    **PATENT ABSTRACTS OF JAPAN, Band 10, Nr.**
    **255 (E-433)2311r, 2. September 1986; & JP-A-61**
    **81 180**

Courier Press, Leamington Spa, England.

## Beschreibung

Die Erfindung bezieht sich auf eine Phasenregeleinrichtung für den steuerbare Halbleiter afweisenden Wechselrichter eines Parallelschwingkreisumrichters mit einem Steuerimpulse an die Halbleiter liefernden, von einer Phasenvergleichsstufe angesteuerten Oszillator, wobei die Phasenvergleichsstufe in Abhängigkeit von der Phasenverschiebung eines mit der Wechselrichterausgangsspannung phasengleichen Signals und eines mit dem Wechselrichterausgangsstrom phasengleichen Signals die Oszillatorfrequenz derart steuert, daß die Wechselrichterausgangsspannung und der Wechselrichterausgangsstrom in Phase sind.

Würde man zur Aufrechterhaltung des Schwingbetriebes eines belasteten Parallelschwingkreises eines Umrichters nur die Wechselrichterausgangsspannung für die Ansteuerung der Halbleiter des Wechselrichters benutzen, dann würde sich eine Phasenverschiebung zwischen der Wechselrichterausgangsspannung und dem Wechselrichterausgangsstrom im induktiven Sinn ergeben. Durch die induktiven Rückströme würden die zu steuernden Halbleiter gefährdet.

Diese Gefahr besteht nicht bei Einsatz einer bekannten Phasenregeleinrichtung der eingangs genannten Art (EP—A—109 522). Durch unmittelbaren Phasenvergleich der Wechselrichterausgangsspannung und des Wechselrichterausgangsstroms läßt sich ein Steuersignal für den Oszillator gewinnen, durch das durch Erhöhung oder Erniedrigung der Oszillatorfrequenz die Phasenvershiebung ausgeregelt werden kann. Probleme gibt es bei dieser Phasenregeleinrichtung allerdings dann, wenn kein oder ein kaum noch erfaßbarer Wechselrichterausgangsstrom fließt. Solche Verhältnisse treten beispielsweise beim Anschwingen auf.

Der Erfindung liegt die Aufgabe zugrunde, eine Phasenregeleinrichtung für Wechselrichter eines Parallelschwingkreisumrichters zu schaffen, bei dem unabhängig von der Schwingkreisbelastung, insbesondere im Leerlaufbetrieb Wechselrichterausgangsstrom und Wechselrichterausgangsspannung in Phase gehalten werden.

Diese Aufgabe wird erfindungsgemäß bei einer Phasenregeleinrichtung der eingangs genannten Art gemäß den Merkmalen des Kenn zeichnenden Teiles gelöst.

Die erfindungsgemäße Phasenregeleinrichtung basiert auf dem PLL (Phase-Locked-Loop)-Prinzip und auf der Erkenntnis, daß die im Betrieb auftretende Phasenverschiebung zwischen der Wechselrichterausgangsspannung und dem Wechselrichterausgangsstrom schaltungsabhängig ist, also von den Laufzeiten und Einschaltzeiten der Bauteile abhängt. Deshalb ist es möglich, eine feste, den Lauf- und Einschaltzeiten der Bauelemente der Schaltung entsprechende Phasenverschiebung vorzugeben und an der Wechselrichterausgangsspannung als Führungsgröße zu orientieren. Der Wechselrichterausgangsstrom wird also für die Phasensynchronisation nicht benötigt. Deshalb können Wechselrichterausgangsspannung und Wechselrichterausgangsstrom auch dann noch in Phase gehalten werden, wenn der Wechselrichter im Leerlauf betrieben wird und vom Wechselrichterstrom kein für den Phasenvergleich verwertbares Signal ableitbar ist.

Im folgenden wird die Erfindung anhand eines Blockschaltbildes erläutert.

Ein Oszillator 1, dessen Frequenz für das Anschwingen des Parallelschwingkreises eines Wechselrichters 2 an einem Stellglied 3 einstellbar ist, steuert eine Treiberstufe 4 an, die entsprechende der Frequenz des Oszillators 1 Steuerimpulse an die Steuereingänge der steuerbaren Halbleiter, zum Beispiel der MOS-FET's des als Brückenschaltung aufgebauten Wechselrichters 2 liefert. Das am Schwingkreis des Wechselrichters 2 anstehende Spannungssignal wird auf einen Eingang einer Phasenvergleichsstufe 5 gegeben, deren anderer Eingang ein zu den Steuerimpulsen der Treiberstufe 4 zeitverzögertes signal von einem Signalgeber 6 erhält, der wie die Wechselrichter 2 von der Treiberstufe 4 angesteuert wird. Der Signalgeber 6 könnte natürlich auch unmittelbar von dem Oszillator 1 angesteuert sein. In jedem Fall liefert der Signalgeber 6 ein um einen bestimmten Betrag $t_v$ zeitverzögertes Signal gegenüber den Steuersignalen für den Wechselrichter 2. Die Phasenvergleichstufe 5 ermittelt die Phasenverschiebung zwischen diesen beiden Signalen. Wird eine Phasenverschiebung festgestellt, liefert die Phasenvergleichsstufe 5 über einen Tiefpaß 7 ein Stellsignal an den Oszillator 1, der die Frequenz in dem Sinne erhöht oder erniedrigt, daß Strom und Spannung im Schwingkreis wieder phasengleich sind. Durch den Tiefpaß 7 wird das Regelverhalten der Phasenregeleinrichtung gedämpft.

Mit der erfindungsgemäßen Phasenregeleinrichtung wird erreicht, daß unabhängig von der Belastung des Parallelschwingkreises der Schwingkreis den Wechselrichter nur rein ohmsch belastet. Dadurch wird auch eine Gefährdung der Halbleiterbauelemente ausgeschlossen.

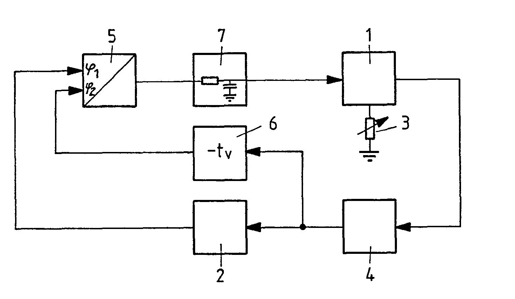

## Patentanspruch

Phasenregeleinrichtung für den steuerbare Halbleiter aufweisenden Wechselrichter (2) eines Parallelschwingkreisumrichters mit einem Steuerimpulse an die Halbleiter liefernden, von einer Phasenvergleichsstufe (5) angesteuerten Oszillator (1), wobei die Phasenvergleichsstufe (5) in Abhängigkeit von der Phasenverschiebung eines mit der Wechselrichterausgangssspannung phasengleichen Signals und eines mit dem Wechselrichterausgangssstrom phasengleichen Signals die Oszillatorfrequenz derart steuert, daß die Wechselrichterausgangsspannung und der Wechselrichterausgangsstrom in Phase sind, dadurch gekennzeichnet, daß anstelle von vom Wechselrichterausgangsstrom abgeleiteten, mit ihm phasengleichen Signale ein von den Steuerimpulsen des Oszillators (1) angesteuerter Signalgeber (6) gegenüber diesen Steuerimpulsen zeitverzögerte Signale an die Phasenvergleichsstufe (5) liefert.

**Revendication**

Dispositif de régulation de phase pour l'onduleur (2) présentant des semi-conducteurs com-mandables d'un mutateur à circuit oscillant parallèle, avec un oscillateur (1) délivrant des impulsions de commande aux semi-conducteurs et excité par un étage de comparaison de phase (5), l'étage de comparaison de phase (5) commandant la fréquence d'oscillateur en fonction du déphasage d'un signal en concordance de phase avec la tension de sortie de l'onduleur et d'un signal en concordance de phase avec le courant de sortie de l'onduleur de telle manière que la tension de sortie de l'onduleur et le courant de sortie de l'onduleur soient en phase, caractérisé en ce que, au lieu de signaux dérivés du courant de sortie de l'onduleur et en concordance de phase avec celui-ci, un émetteur de signaux (6), commandé par les impulsions de commande de l'oscillateur (1), délivre à l'étage de comparaison de phase (5) des signaux retardés dans le temps par rapport à ces impulsions de commande.

**Claim**

A phase control device for the inverse rectifier (2), having controllable semiconductors, of a parallel oscillating circuit inverter having an oscillator (1) which delivers control pulses to the semiconductors and is operated by a phase comparator stage (5), the phase comparator stage (5) so controlling the oscillator frequency, in dependence on the phase shift of a signal of like phase to the inverse amplifier output voltage and on a signal of like phase to the inverse rectifier output current, that the inverse rectifier output voltage and the inverse rectifier output current are in phase, characterized in that instead of signals derived from the inverse amplifier output current and of like phase thereto, a signal transmitter (6) controlled by the control pulses of the oscillator (1) delivers to the phase comparator stage (5) signals which are delayed in relation to said control pulses.